# EUROPÄISCHE PATENTSCHRIFT

(11) **EP 3 388 375 B1**
(45) Veröffentlichungstag und Bekanntmachung des Hinweises auf die Patenterteilung: **20.11.2019**
(21) Anmeldenummer: 17166589.6
(22) Anmeldetag: 13.04.2017
(51) Int. Cl.: B65G 53/20, B65B 1/16

(54) **ANLAGE ZUM VERPACKEN VON RIESELFÄHIGEM SCHÜTTGUT IN SÄCKE**
SYSTEM FOR PACKAGING FLOWING BULK MATERIALS IN SACKS
INSTALLATION D'EMBALLAGE EN SACS DE PRODUITS EN VRAC POUVANT RUISSELER

(43) Veröffentlichungstag der Anmeldung: 17.10.2018
(73) Patentinhaber: Claudius Peters Projects GmbH, 21614 Buxtehude (DE)
(72) Erfinder: Lübbert, Bernd, 21614 Buxtehude (DE)
(74) Vertreter: Glawe, Delfs, Moll

(56) Entgegenhaltungen:
- WO-A1-84/01560
- BE-A- 494 008
- CA-A- 1 208 260
- DE-A1- 4 109 960
- DE-A1-102008 056 076
- DE-C- 449 393
- FR-A1- 2 779 136
- GB-A- 940 506

## Beschreibung

Die Erfindung betrifft eine Anlage zum Verpacken von rieselfähigem Schüttgut in Säcke.

Im Stand der Technik sind Anlagen zum Verpacken von rieselfähigem Schüttgut, wie bspw. Zement, in Säcke grundsätzlich bekannt.

In einer weit verbreiteten Bauart wird der zu verpackende Zement aus einem Vorratssilo zunächst über eine abfallende, von unten belüftete Förderrinne zu einem Becherwerk und von diesem in vertikaler Richtung gefördert. Vom oberen Ende des Becherwerks gelangt der Zement wieder über eine abfallende, von unten belüftete Förderrinne zu einem Schwingsieb, durch welches sämtlicher Zement aus dem Vorratssilo hindurchtreten muss, um Fremdkörper, die in den Zement gefallen sein könnten, auszusieben. Der gesiebte Zement fällt schwerkraftbedingt in einen Vorbunker, der derart oberhalb des eigentlichen Packers angeordnet ist, der den ihm zugeführten Zement in Säcke füllt, dass der Zement allein aufgrund der Schwerkraft von dem Vorbunker in den Packer gelangen kann.

Insbesondere im Bereich des Packers, aber auch an anderen Stellen der Anlage austretender Zement wird aufgefangen und der Anlage erneut zugeführt. Die Zuführung erfolgt dabei grundsätzlich vor dem Schwingsieb, um zu vermeiden, dass evtl. bei der Rückführung auftretende Verunreinigungen in den Packer gelangen.

Aufgrund der gemäß diesem Stand der Technik zwingend erforderlichen Anordnung eines Vorbunkers und eines großen, zum Sieben von sämtlichen aus dem Vorratssilo zugeführten, aber auch des rückgeführten Zements ausgebildeten Schwingsiebs oberhalb des Packers ergibt sich eine derart große Bauhöhe für die Anlage, dass sie nicht in üblichen Lagerhallen o.ä. installiert werden kann. Vielmehr muss ein gesondertes Gebäude mit einer Deckenhöhe von üblicherweise 20 m und mehr errichtet werden, um darin die beschriebene Anordnung unterzubringen. Dies ist regelmäßig mit hohen Kosten verbunden.

Das Dokument WO 84/01560 A1 offenbart eine Vorrichtung zum Transport von Schüttgut nach dem Oberbegriff des Anspruchs 1, bspw. zur Zuführung von Tonerde in ein Elektrolysebad oder zur Beschickung von Verpackungsmaschinen. Das Schüttgut wird dabei von einem zentralen Aufgabesilos über eine Fluidisierförderanlage zu einem oder mehreren Zwischenbunkern transportiert, von wo aus es in einem nicht fluidisierten Zustand schwerkraftbedingt nach unten entnommen werden kann.

Der Erfindung liegt die Aufgabe zugrunde, eine Anlage zum Verpacken von rieselfähigem Schüttgut in Säcke zu schaffen, die gegenüber diesem Stand der Technik verbessert ist.

Gelöst wird diese Aufgabe durch eine Anlage gemäß dem Hauptanspruch. Vorteilhafte Weiterbildungen sind Gegenstand der abhängigen Ansprüche.

Demnach betrifft die Erfindung eine Anlage zum Verpacken von rieselfähigem Schüttgut in Säcke, umfassend ein Silo zur Aufnahme des zu verpackenden Schüttguts und einen Packer zum automatischen Befüllen bereitgestellter Säcke mit dem Packer zugeführten Schüttgut, wobei die Austragevorrichtung des Silos über ein durchgehendes Förderrohr zum pneumatischen Fördern von Schüttgut mit einem wenigstens abschnittsweise entlang des Förderrohrs angeordneten Fluidisierboden mit der Zuführöffnung des Packers verbunden ist und eine Sammelvorrichtung für aus der Anlage ausgefallenes Schüttgut, mit der das ausgefallene Schüttgut an wenigstens einem definierten Ort gesammelt wird, und eine Einspeisevorrichtung zur Einspeisung des gesammelten ausgetretenen Schüttguts in das Förderrohr vorgesehen ist.

Die Erfindung hat erkannt, dass durch die Verwendung eines Förderrohrs zum pneumatischen Fördern mit einem wenigstens abschnittsweise entlang des Förderrohrs angeordneten Fluidisierboden, wie es bspw. in der EP 1 429 982 A1 beschrieben ist, eine vollkommen neue Konfiguration einer Anlage zum Verpacken von rieselfähigem Schüttgut in Säcke möglich ist, die weit über den einfachen Austausch einer Fördertechnologie hinausgeht.

So hat die Erfindung erkannt, dass aufgrund der bei entsprechenden Förderrohren gegebenen Möglichkeit der beliebigen Abschaltung und Wiederaufnahme der Förderung zu jedem beliebigen Zeitpunkt auf einen Vorbunker, wie er im Stand der Technik zwingend erforderlich ist, vollständig verzichtet werden kann. Bei den im Stand der Technik verwendeten Förderrinnen ist es nämlich zwingend erforderlich, dass diese vor einer Abschaltung der Förderung vollständig leergefahren werden. Wird also der Packer - bspw. aufgrund einer Fehlfunktion - plötzlich angehalten und entnimmt in der Folge dem Vorbunker kein Schüttgut mehr, kann im Stand der Technik zwar die Entnahme von Schüttgut aus dem Vorratssilo unterbrochen werden, das bereits in den Förderrinnen und ggf. einem Becherwerk befindliches Schüttgut muss jedoch bis zum Ende der Förderstrecke transportiert werden. Da der Packer kein Schüttgut mehr aufnimmt, muss im Stand der Technik zwingend ein Vorbunker vorgesehen sein, der ausreichend dimensioniert ist, das auf der Förderstrecke befindliche Schüttgut bei Bedarf zwischenzulagern. Der Vorbunker ist weiterhin erforderlich, um ein zügiges Anfahren einer Anlage gemäß dem Stand der Technik zu gewährleisten. Aufgrund des erforderlichen Leerfahrens der Förderrinnen bedarf es nämlich einiger Zeit bevor aus dem Vorratssilo ausgegebenes Schüttgut zum Packer gelangt. Dieser Zeitraum kann mit im Vorbunker zwischengelagertem Schüttgut überbrückt werden.

Bei der erfindungsgemäßen Anlage ist ein Vorbunker nicht mehr erforderlich. Die pneumatische Förderung durch das Förderrohr kann zu jedem beliebigen Zeitpunkt - also bspw. auch bei einem Anhalten des Packers - angehalten und - bei wieder Anfahren des Packers - praktisch verzögerungsfrei wieder aufgenommen werden. Die marginalen Schwankungen in der Schüttgutzufuhr bei An- und Abschalten des Packers bzw. der pneumatischen Förderung können ohne weiteres durch das im Packer aufgrund prozesstechnischer Erfordernisse vorgehaltene Schüttgutvolumen ausgeglichen werden. Durch den nunmehr möglichen Verzicht auf einen Vorbunker kann die Bauhöhe der Anlage bereits signifikant reduziert werden.

Darüber hinaus kann auf ein Schwingsieb, durch welches sämtliches von dem Silo zum Packer befördertes Schüttgut hindurchtreten muss, verzichtet werden. Anders als im Stand der Technik mit Förderrinnen und/oder Becherwerkes ist der Förderweg des Schüttgutes erfindungsgemäß aufgrund des durchgehenden Förderrohrs nämlich vollständig geschlossen, sodass der Eintritt von Fremdkörpern in den Schüttgutstrom ausgeschlossen ist. Da bei der pneumatischen Förderung außerdem keine unmittelbar mit dem zu fördernden Schüttgutstrom in Kontakt kommende Mechanik erforderlich ist, von der sich ggf. einzelne Teile lösen könnten, ist sichergestellt, dass das im Silo befindliche reine Schüttgut nicht aufgrund der Förderung vom Silo zu dem Packer durch Fremdkörper o.ä. verunreinigt werden kann. Auf ein großes Schwingsieb, wie im Stand der Technik zwingend erforderlich, kann demnach verzichtet werden. Auch dadurch lässt die Bauhöhe einer erfindungsgemäßen Anlage gegenüber dem Stand der Technik weiter reduzieren.

Auch kann auf ein Becherwerk für die Förderung vom Silo zum Packer, welches eine über die Abgabehöhe für das anzuhebende Schüttgut (also Oberhalb des Vorbunkers und des Schwingsiebs) hinausgehende Bauhöhe erfordert, verzichtet werden, sodass die bei Verwendung eines solchen Becherwerks im Stand der Technik regelmäßige Erhöhung der Gesamtbauhöhe bei der erfindungsgemäßen Lösung wegfällt.

Dabei kann sich zunutze gemacht werden, dass eine pneumatische Förderung in einem Förderrohr auch in vertikaler Richtung möglich ist. Es ist sogar bevorzugt, wenn das Förderrohr ausgehend von der Austragevorrichtung des Silos im Bereich zwischen Austragevorrichtung und Zuführöffnung des Packers abschnittsweise ansteigend ist. Dadurch ist es ohne weiteres möglich, dass die Austragevorrichtung des Silos geodätisch unterhalb der Zufuhröffnung des Packers angeordnet ist. Insbesondere ist eine erhöhte Anordnung des Silos, um daran bspw. eine abfallende Förderrinne anzuordnen, nicht erforderlich. Das Förderrohr kann auch ausschließlich abschnittsweise horizontal und/oder abschnittsweise ansteigend verlaufen, womit also auf einen auch nur abschnittsweise abfallenden Verlauf des Förderrohrs vollständig verzichtet wird. In diesem Fall ist regelmäßig eine besonders niedrige Bauhöhe der erfindungsgemäßen Anlage erreichbar.

Um zu verhindern, dass das Schüttgut in Form eines Luft-Schüttgut-Gemischs in den Packer gelangt, was unter Umständen zu Problemen beim Befüllen der Säcke führen könnte, kann das Förderrohr im Bereich der Zuführöffnung der Packers einen Abscheider zum Abscheiden des rieselfähigen Schüttguts vom Fördergasstrom aufweisen. In einem entsprechenden Abscheider kann das Schüttgut von dem für die Förderung eingesetzten Gas, insbesondere Luft, wenigstens zu großen Teilen getrennt werden, sodass das an den Packer abgegebene Schüttgut ausreichend frei von Fördergas ist.

Der Abscheider kann dabei insbesondere als Entspannungsraum mit zu einer mit der Zuführöffnung des Packers verbundenen Auslassöffnung hin abfallendem Boden und einer Gasentnahmeöffnung ausgebildet sein. In dem Entspannungsraum sinkt der Druck im Schüttgut-Fördergas-Gemisch und das Schüttgut fällt schwerkraftbedingt nach unten aus. Dort landet es unmittelbar in der Auslassöffnung oder auf dem zu dieser Auslassöffnung hin geneigten Boden, auf dem es wiederum zur Auslassöffnung rutscht. Dabei kann am abfallenden Boden ein Fluidisierungselement angeordnet sein, welches das Rutschen des ausgefallenen Schüttguts zur Auslassöffnung begünstigt. Das Fördergas kann durch die Gasentnahmeöffnung entweichen, welche bevorzugt im oberen Bereich, vorzugsweise an der Decke des Entspannungsraums vorgesehen und/oder mit einem Filter zum Herausfiltern von evtl. Schüttgutresten im Gasstrom versehen ist.

Insbesondere im Bereich des Packers kann auch bei der erfindungsgemäßen Anlage Schüttgut austreten. Erfindungsgemäß wird dieses Schüttgut von der Sammelvorrichtung an wenigstens einem definierten Ort gesammelt, wobei eine Einspeisevorrichtung zur Einspeisung des gesammelten ausgetretenen Schüttguts in das Förderrohr vorgesehen ist. In anderen Worten soll das ausgetretene Schüttgut an einem vorgegebenen Ort - bspw. mit Hilfe von Förderschnecken - zusammengetragen werden, von wo es dann über eine Einspeisevorrichtung dem Förderrohr und damit dem Packer wieder zugeführt wird. Das ausgetretene Schüttgut wird also rückgeführt.

Die Einspeisevorrichtung ist dabei bevorzugt zur Einspeisung im Bereich des Abscheiders des Förderrohrs ausgebildet. Dies bietet den Vorteil, dass das rückgeführte Schüttgut nicht mehr für eine tatsächliche Förderung im Förderrohr fluidisiert werden muss.

Weiterhin ist bevorzugt, wenn zwischen dem definierten Ort und der Einspeisevorrichtung ein Schwingsieb zum Aussieben von Fremdstoffen aus dem rückgeführten Schüttgut vorgesehen ist. Da lediglich das zuvor ausgetretene und rückgeführte Schüttgut durch dieses Schwingsieb hindurchtreten muss, kann das Schwingsieb deutlich kleiner ausgeführt sein, als ein Schwingsieb, durch welches beim Stand der Technik der gesamte Schüttgutstrom hindurchgeführt werden muss.

Zwischen dem wenigstens einen definierten Ort und der Einspeisevorrichtung kann weiterhin eine Fördervorrichtung, vorzugsweise umfassend eine Förderschnecke und/oder ein Becherwerk, vorgesehen sein. Auch hier gilt, dass die Fördervorrichtung lediglich das rückgeführte Schüttgut transportieren muss und dementsprechend deutlich kleiner ausgeführt werden kann, als bspw. ein Becherwerk als Teil der Förderstrecke zwischen Silo und Packer, wie es im Stand der Technik häufig vorgesehen ist.

Die pneumatische Förderung durch ein Förderrohr mit wenigstens abschnittsweise entlang des Förderrohrs angeordnetem Fluidisierboden ist unproblematisch auch über größere Strecken möglich. Es ist insbesondere bevorzugt, wenn das Förderrohr bei einer erfindungsgemäßen Anlage eine Länge von wenigstens 10 m, vorzugsweise von wenigstens 15 m, weiter vorzugsweise von wenigstens 20 m aufweist. Durch eine entsprechende Länge des Förderrohrs ist eine flexible und individuell an lokale Gegebenheiten angepasste Anlagenkonfiguration möglich.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Darstellung eines ersten Ausführungsbeispiels einer erfindungsgemäßen Anlage; und
- Figur 2:: schematische Schnittansicht des Förderrohrendes der Anlage aus Figur 1.

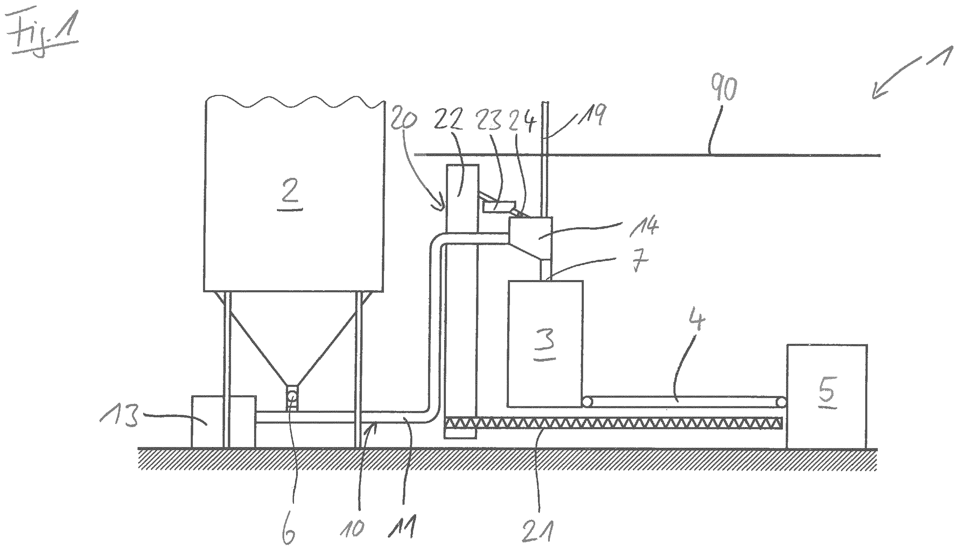

In Figur 1 ist eine erfindungsgemäße Anlage 1 zum Verpacken von rieselfähigem Schüttgut in Säcke gezeigt.

Das rieselfähige Schüttgut wird in einem Silo 2 vorgehalten und über einen Packer 3 in bereitgestellte Leersäcke (nicht dargestellt) gefüllt, die dann im befüllten Zustand mit Hilfe eines Förderbandes 4 zu einem Palettierer 5 transportiert werden, der Gruppen vom Packer 3 kommender Säcke jeweils zu einer Palette zusammenfasst. Die so gebildeten Paletten können bspw. über eine Gabelstapler entnommen und weitertransportiert werden. Alternativ zu einem Palettierer 5 kann auch ein LWK- oder Schiffsbelader vorgesehen sein.

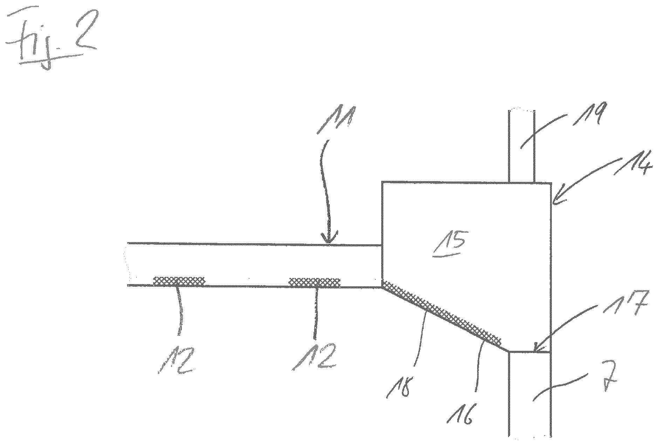

Zur Förderung des Schüttgutes aus dem Silo 2 zum Packer 3 ist erfindungsgemäß eine pneumatische Förderanlage 10 vorgesehen. Diese pneumatische Förderanlage 10 umfasst ein durchgehendes Förderrohr 11 zum pneumatischen Fördern von Schüttgut mit bekanntermaßen wenigstens abschnittsweise entlang des Förderrohrs 11 angeordneten Fluidisierböden 12 (vgl. Figur 2). An dem einen Ende des Förderrohrs 11 ist eine Druckgasquelle 13 vorgesehen, welche der pneumatischen Förderanlage 10 Druckluft sowohl als Förder- als auch als Fluidisiergas zur Verfügung stellt. An dem anderen Ende ist das Förderrohr zu einem Abscheider 14 ausgebildet, der später in Zusammenhang mit Figur 2 noch näher erläutert wird.

Das Förderrohr 11 der pneumatischen Förderanlage 10 verläuft abschnittsweise ausschließlich entweder horizontal oder vertikal. Dies hat zur Folge, dass die als Dosierwalze ausgestaltete Austragevorrichtung 6 des Silos 2 unterhalb der Zuführöffnung 7 des Packers 3 angeordnet sein kann.

Da sich die Förderung durch das Förderrohr 11 außerdem beliebig an- und abstellen lässt, kann auf einen in Förderrichtung vor dem Packer 3 angeordneter Vorbunker - wie er im Stand der Technik zwingend erforderlich ist - verzichtet werden. Da das Förderrohr 11 außerdem derart geschlossen ist, dass keine Fremdkörper in das Schüttgut gelangen können, kann auch auf ein Schwingsieb verzichtet werden. In der Folge ist der Packer 3 bzw. der Geräteturm umfassend den Packer 3 deutlich niedriger als ein entsprechender Geräteturm aus dem Stand der Technik umfassend neben einem Packer 3 noch einen Vorbunker und ein Schwingsieb. In der Folge lässt sich die erfindungsgemäße Anlage in einer gegenüber dem Stand der Technik regelmäßig niedrigeren Halle, deren Decke bei 90 angedeutet ist, errichten - insbesondere wenn, wie dargestellt und auch im Stand der Technik üblich, das Silo 2 außerhalb der Halle angeordnet ist.

In Figur 2 ist das Ende des Förderrohrs 11, an dem der Abscheider 14 angeordnet ist, in einer schematischen Schnittdarstellung gezeigt. Aus dem eigentlichen Förderrohr 11 mit den darin abschnittsweise angeordneten Fluidisierböden 12 gelangt das Schüttgut in Förderrichtung in einen Entspannungsraum 15 mit einem Boden 16, der zu einer mit der Zufuhröffnung 7 des Packers 3 verbunden Auslassöffnung 17 hin abfällt. An diesem abfallenden Boden 16 ist ein Fluidisierungselement 18 vorgesehen, der das Rutschen von auf dem Boden 16 aufgekommenem Schüttgut in Richtung Auslassöffnung 17 fördert. An der Decke des Entspannungsraums 15 ist eine Gasentnahmeöffnung 19 vorgesehen, durch die das Förder- und Fluidisiergas entweichen kann, wobei im Bereich der Gasentnahmeöffnung 19 vorzugsweise noch ein Filter zum Abscheiden etwaiger Schüttgutreste vorgesehen ist.

In dem Entspannungsraum 15 entspannt sich das aus dem Förderrohr 11 kommende Schüttgut-Gas-Gemisch, wobei das Schüttgut schwerkraftbedingt nach unten fällt und aufgrund des abfallenden Bodens 16 zur Auslassöffnung 17 gelangt. Das schüttgutfreie Gas kann durch die Gasentnahmeöffnung 19 entweichen.

Um aus dem Packer 3 oder dem nachfolgenden Transport über das Förderband 4 ausfallendes Schüttgut rückzuführen, ist unterhalb des Packers 3 und des Förderbandes 4 eine geeignete Sammelvorrichtung 20 umfassend eine Förderschnecke 21 vorgesehen. Mit Hilfe dieser Förderschnecke 21 wird das ausgefallene Schüttgut zu einem Becherwerk 22 transportiert, mit dem das Schüttgut auf eine Höhe oberhalb des Packers 3 angehoben wird. Von dort aus gelangt das rückzuführende Schüttgut in ein Schwingsieb 23, mit dem evtl. Fremdstoffe ausgesiebt werden. Über eine Einspeisevorrichtung 24 gelangt das rückzuführende Schüttgut letztendlich in den Teil des Förderrohrs 11, der als Abscheider 14 ausgebildet ist, von wo es dem Packer 3 wieder zugeführt wird.

Da lediglich das zuvor ausgetretene Schüttgut über das Becherwerk 22 gefördert und durch das Schwingsieb 23 hindurchtreten muss, sind diese beiden Komponenten deutlich kleiner ausgeführt, als Becherwerk und Schwingsieb in einer Anlage gemäß dem Stand der Technik, durch welche der gesamte Schüttgutstrom gefördert bzw. hindurchgeführt werden muss.

Alternativ zu einem Becherwerk 22 kann auch eine Senkrechtsschnecke vorgesehen sein.

Die Länge des Förderrohrs 11 bei der in Figur 1 gezeigten Anlage 1 beträgt 15 m.

## Patentansprüche

1. Anlage (1) zum Verpacken von rieselfähigem Schüttgut in Säcke, umfassend ein Silo (2) zur Aufnahme des zu verpackenden Schüttguts und einen Packer (3) zum automatischen Befüllen bereitgestellter Säcke mit dem Packer (3) zugeführten Schüttgut,
wobei die Austragevorrichtung (6) des Silos (2) über ein durchgehendes Förderrohr (11) zum pneumatischen Fördern von Schüttgut mit wenigstens abschnittsweise entlang des Förderrohrs (11) angeordneten Fluidisierböden (12) mit der Zuführöffnung (7) des Packers (3) verbunden ist, **dadurch gekennzeichnet, dass** und eine Sammelvorrichtung (20) für aus der Anlage (1) ausgefallenes Schüttgut, mit der das ausgefallene Schüttgut an wenigstens einem definierten Ort gesammelt wird, und eine Einspeisevorrichtung (24) zur Einspeisung des gesammelten ausgetretenen Schüttguts in das Förderrohr (11) vorgesehen ist.

2. Anlage nach Anspruch 1,
**dadurch gekennzeichnet, dass**
das Förderrohr (11) ausgehend von der Austragevorrichtung (6) des Silos (2) im Bereich zwischen Austragevorrichtung (6) und Zuführöffnung (7) des Packers (3) abschnittsweise ansteigend ist, vorzugsweise ausschließlich abschnittsweise horizontal und/oder abschnittsweise ansteigend verläuft.

3. Anlage nach Anspruch 1 oder 2,
**dadurch gekennzeichnet, dass**
das Förderrohr (11) im Bereich der Zuführöffnung (7) des Packers (3) einen Abscheider (14) zum Abscheiden des rieselfähigen Schüttguts vom Fördergasstrom aufweist.

4. Anlage nach Anspruch 3,
**dadurch gekennzeichnet, dass**
der Abscheider (14) als Entspannungsraum (15) mit zu einer mit der Zuführöffnung (7) des Packers (3) verbundenen Auslassöffnung (17) hinabfallendem Boden (16) und einer Gasentnahmeöffnung (19) ausgebildet ist, wobei am abfallenden Boden (16) vorzugsweise ein Fluidisierungselement (18) angeordnet ist.

5. Anlage nach einem der vorhergehenden Ansprüche,
**dadurch gekennzeichnet, dass**
die Einspeisevorrichtung (24) zur Einspeisung im Bereich des Abscheiders (14) ausgebildet ist.

6. Anlage nach einem der vorhergehenden Ansprüche,
**dadurch gekennzeichnet, dass**
vor der Einspeisevorrichtung (24) ein Schwingsieb (23) zum Aussieben von Fremdstoffen vorgesehen ist.

7. Anlage nach einem der vorhergehenden Ansprüche,
**dadurch gekennzeichnet, dass**
zwischen dem wenigstens einen definierten Ort und der Einspeisevorrichtung (24) eine Fördervorrichtung, vorzugsweise umfassend eine Förderschnecke (21) und/oder ein Becherwerk (22), vorgesehen ist.

8. Anlage nach einem der vorhergehenden Ansprüche,
**dadurch gekennzeichnet, dass**
das Förderrohr (11) eine Länge von wenigstens 10 m, vorzugsweise von wenigstens 15 m, weiter vorzugsweise von wenigstens 20 m aufweist.

## Claims

1. Installation (1) for packaging free-flowing bulk material into bags, comprising a silo (2) for accommodating the bulk material which is to be packaged, and also comprising a packer (3), by means of which bags provided are automatically filled with bulk material supplied to the packer (3),
wherein the discharging device (6) of the silo (2) is connected to the supply opening (7) of the packer (3) via a continuous delivery pipe (11) which is intended for the pneumatic delivery of bulk material and has fluidizing bases (12) arranged at least along parts of the delivery pipe (11),
**characterized in that** a collecting device (20) is provided for bulk material which has fallen out of the installation (1), the bulk material which has fallen out being collected at at least one defined location by said collecting device, and a feed device (24) is provided for feeding the escaped and collected bulk material into the delivery pipe (11).

2. Installation according to Claim 1,
**characterized in that**
starting from the discharging device (6) of the silo (2), in the region between the discharging device (6) and supply opening (7) of the packer (3), the delivery pipe (11) ascends in part, preferably runs exclusively horizontally in part and/or exclusively ascends in part.

3. Installation according to Claim 1 or 2,
**characterized in that**,
in the region of the supply opening (7) of the packer (3), the delivery pipe (11) has a separator (14) for separating the free-flowing bulk material from the delivery-gas stream.

4. Installation according to Claim 3,
**characterized in that**
the separator (14) is designed in the form of a pressure-relief chamber (15) having a base (16) which slopes down in the direction of an outlet opening (17) connected to the supply opening (7) of the packer (3), and having a gas-removal opening (19), wherein preferably a fluidizing element (18) is arranged on the downwardly sloping base (16) .

5. Installation according to one of the preceding claims,
**characterized in that**
the feed device (24) is designed for feeding in the region of the separator (14).

6. Installation according to one of the preceding claims,
**characterized in that**
an oscillating screen (23) for screening out foreign matter is provided upstream of the feed device (24).

7. Installation according to one of the preceding claims,
**characterized in that**
a conveyor, preferably comprising a conveying screw (21) and/or a bucket conveyor (22), is provided between the at least one defined location and the feed device (24).

8. Installation according to one of the preceding claims,
**characterized in that**
the delivery pipe (11) has a length of at least 10 m, preferably of at least 15 m, further preferably of at least 20 m.

## Revendications

1. Installation (1) pour l'emballage dans des sacs de produit en vrac coulant, comprenant un silo (2) pour recevoir le produit en vrac à emballer et un emballeur (3) pour remplir automatiquement des sacs préparés avec le produit en vrac acheminé à l'emballeur (3)
le dispositif de décharge (6) du silo (2) étant raccordé à l'ouverture d'alimentation (7) de l'emballeur (3) par le biais d'un tube de transport continu (11) pour le transport pneumatique de produit en vrac avec des soles de fluidisation (12) disposées au moins en partie le long du tube de transport (11),
**caractérisée en ce**
**qu'**un dispositif de collecte (20) est prévu pour le produit en vrac tombant de l'installation (1), avec lequel le produit en vrac tombé est rassemblé au niveau d'au moins un emplacement défini et un dispositif d'injection (24) est prévu pour injecter dans le tube de transport (11) le produit en vrac sorti et rassemblé.

2. Installation selon la revendication 1,
**caractérisée en ce que**
le tube de transport (11) monte en partie à partir du dispositif de décharge (6) du silo (2) dans la région entre le dispositif de décharge (6) et l'ouverture d'alimentation (7) de l'emballeur (3), de préférence s'étend exclusivement en partie horizontalement et/ou en partie de manière ascendante.

3. Installation selon la revendication 1 ou 2,
**caractérisée en ce que**
le tube de transport (11), dans la région de l'ouverture d'alimentation (7) de l'emballeur (3), présente un séparateur (14) pour séparer le produit en vrac coulant du flux de gaz de transport.

4. Installation selon la revendication 3,
**caractérisée en ce que**
le séparateur (14) est réalisé sous forme d'espace de détente (15) avec une sole (16) descendant vers une ouverture de sortie (17) raccordée à l'ouverture d'alimentation (7) de l'emballeur (3) et une ouverture de prélèvement de gaz (19), un élément de fluidisation (18) étant de préférence disposé au niveau de la sole descendante (16).

5. Installation selon l'une quelconque des revendications précédentes,
**caractérisée en ce que**
le dispositif d'injection (24) est réalisé pour effectuer l'injection dans la région du séparateur (14) .

6. Installation selon l'une quelconque des revendications précédentes,
**caractérisée en ce que**
un crible oscillant (23) est prévu avant le dispositif d'injection (24) pour éliminer par criblage les substances étrangères.

7. Installation selon l'une quelconque des revendications précédentes,
**caractérisée en ce**
**qu'**entre l'au moins un emplacement défini et le dispositif d'injection (24) est prévu un dispositif de transport, de préférence comprenant une tarière (21) et/ou un élévateur à godets (22).

8. Installation selon l'une quelconque des revendications précédentes,
**caractérisée en ce que**
le tube de transport (11) a une longueur d'au moins 10 m, de préférence d'au moins 15 m, plus préférablement de préférence d'au moins 20 m.
